# EUROPEAN PATENT SPECIFICATION

(11) **EP 3 191 908 B1**
(45) Date of publication and mention of the grant of the patent: **19.12.2018**
(21) Application number: 15775249.4
(22) Date of filing: 01.09.2015
(51) Int. Cl.: G05D 11/13, B60S 3/04, A47L 15/00

(54) **APPARATUS AND METHOD FOR DISPENSING A WASH SOLUTION FOR CONVEYING THE SAME INTO A WASHING DEVICE, CAR WASH FACILITY AND PROGRAM MEDIA**
VORRICHTUNG UND VERFAHREN ZUR VERTEILUNG DER WASCHLÖSUNG UND ZUM TRANSPORT DERGLEICHEN IN EINE WASCHANLAGE, WASCHANLAGE FÜR FAHRZEUGE UND PROGRAMM ENTHALTENDE MITTEL
APPAREIL ET PROCÉDÉ DE DISTRIBUTION D'UNE SOLUTION DE LAVAGE POUR TRANSPORT DANS UN DISPOSITIF DE LAVAGE, INSTALLATION DE NETTOYAGE DES AUTOMOBILES ET MOYENS PROGRAMMÉS

(30) Priority: 11.09.2014 FI 20145791
(43) Date of publication of application: 19.07.2017
(73) Proprietor: Pineline OY, 11710 Riihimäki (FI)
(72) Inventor: MÄKINEN, Esa, 11710 Riihimäki (FI); ROINE, Juho, 00960 Helsinki (FI); AJO, Jukka, 15700 Lahti (FI)
(74) Representative: LEITZINGER OY
(86) International application number: PCT/FI2015/050567
(87) International publication number: WO 2016/038244

(56) References cited:
- EP-A1- 0 571 806
- EP-A1- 0 676 133
- GB-A- 2 123 148
- GB-A- 2 141 487
- US-A- 2 296 055
- US-A1- 2003 127 110

## Description

### Background of the invention

The present invention relates to an apparatus for dispensing a wash solution for conveying the same into a washing device, said apparatus comprising a first tank for the wash solution, said tank including elements for supplying the tank with wash water and a wash solution, elements for measuring the amount of water to be supplied into the tank, and elements for conveying the wash solution from the tank into the washing device. The invention relates also to a car wash facility. In addition, the invention relates to a method for dispensing a wash solution, made up of water and a detergent chemical and to be conveyed into a washing device, at a desired concentration of detergent chemical. A still further object of the invention is a program media.

### Prior art

The current problems with car wash facilities include, among others, different wash solution concentration requirements for winter and summer seasons, which require manual adjustment procedures with resulting considerable costs. In addition, it is difficult with current systems to uphold the concentration of a wash solution due, among other things, to pressure fluctuations in the service water of each car wash facility and problems in systems warning about depleting chemical containers. Therefore, it is necessary in car wash facilities from time to time to conduct manual verifying measurements by means of a measuring cup to find out how the adjustments have held.

Thus, it is an object of the present invention to provide a reliable apparatus for dispensing a wash solution at a desired detergent concentration into a washing device. In order to attain this objective, an apparatus of the invention is characterized by what is presented in the characterizing section of claim 1. A car wash facility of the invention is characterized by what is presented in the characterizing section of the independent claim 6. A method of the invention is in turn characterized by what is presented in the characterizing section of the independent claim 7. A program media of the invention is characterized by the characterizing features presented by the independent claim 13.

### Drawings

The invention will now be described more closely with reference to the accompanying drawings, in which:
- Fig. 1: shows in a schematic view of principle one exemplary embodiment for an apparatus of the invention,
- Fig. 2: shows one component for an apparatus of the invention in more detail in a schematic isometric view, and
- Fig. 3: shows one optional embodiment for the component of fig. 2 in a schematic side view.

### Detailed description of the invention

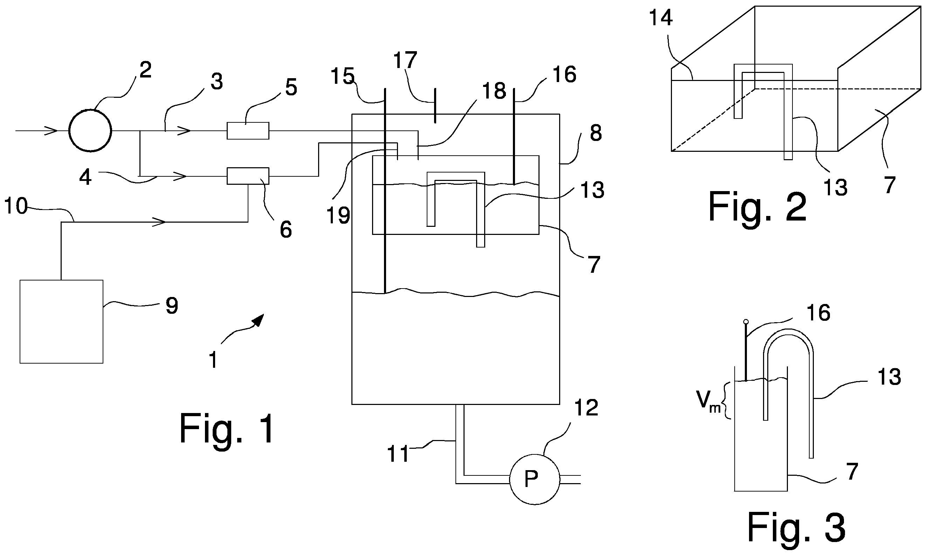

Fig. 1 shows schematically one implementation example for an apparatus 1 of the invention. The apparatus includes a first tank 8, which is used for holding a wash solution at a specific detergent concentration for conveying the same via a pipe 11 by means of a pump 12 into a washing device (not shown), which is for example a car washing device, and which is supplied with the wash solution intermittently according to a desired wash program. For various wash solutions there are provided specific dispensers, e.g. separate ones for waxing wash and solvent wash. Inside the holding tank 8 is fitted a second tank 7 which is provided with siphon means 13. The wash solution is produced by supplying water through a flow meter 2 and by dividing the flow into partial flows along lines 3 and 4, which are provided with magnetic valves 5 and 6, respectively. By controlling the valves 5 and 6, it is possible to determine the ratio and time instant for the partial flows. Downstream of the valve, each line continues to the second tank 7 as line sections 18 and 19, respectively. The valve 6 is equipped with a nozzle member (not shown), which operates on ejector principle drawing in detergent from a chemical tank 9 via a pipe 10 as water is supplied through the nozzle at a suitable pressure. The nozzle member is designed to draw in the detergent chemical at a constant ratio with respect to water supplied by way of the valve 6, for example 1 part of detergent chemical and 2 parts of water, whereby the wash solution passing along the line section 19 downstream of the valve 6 contains about 33% of detergent chemical. The detergent chemical can be in the form of a concentrate or previously admixed in water to a certain concentration, which is diluted with water in the siphon-containing tank 7 and/or in the holding tank 8. The second tank 7 is provided with a surface level sensing element 16, which is set to indicate the attainment of e.g. a 1 liter design volume in the second tank 7. The sensing element 16 comprises preferably an electrically conductive static measuring stick, which provides a signal upon coming to contact with liquid. When the sensing element 16 issues a signal about the attainment of 1 liter design volume, the flow meter 2 will be read for the amount of water that has passed therethrough, thereby enabling the amount of detergent chemical picked up from the chemical tank 9 to be calculated by subtracting the measured amount of water from the volume of 1l. Once the concentration of detergent chemical in the tank 9 is known, this provides a reliable and relatively simple way of determining its concentration in a final wash solution in the tank 8. The second tank 7 is provided with a siphon 13, which enables a delivery of the wash solution into the first tank 8 as soon as the detergent chemical-containing solution has reached a volume required for activating the siphon in the second tank 7. The volume needed for activating the siphon is preferably slightly larger than the design volume, e.g. 1,2 liters.

Fig. 2 shows separately one exemplary embodiment for the second tank 7 in slightly more detail. One edge of the tank is formed with an overflow brim 14 slightly lower than the rest of the tank's edge. The siphon 13 is in this example adapted to open at one of its ends to the proximity of a floor of the tank 7 for enabling the tank to be emptied essentially completely by means of the siphon. The siphon has its other end extended through the floor of the tank 7.

The concentration of a detergent chemical in the wash solution can be determined e.g. at the start of each washing process as the sensing element 16 issues a signal about the attainment of a design volume in the second tank 7, followed by supplying water via the lines 3, 18 and 4, 19 continuously into the second tank 7, wherefrom the wash solution flows by way of both the siphon 13 and the overflow brim 14 into the first tank. The supply of water via the lines 3, 18 and 4, 19 in a continuous manner takes place at a certain ratio between partial flows which can be adjusted as necessary. The adjustment is preferably adapted to enable remote control by connecting the flow meter 2, the magnetic valves 5, 6, and the sensing element 16 to a remote control system. Thereby, it is also possible to produce alarms about various fault conditions. The continuous supply is carried on until the washing process comes to an end, at which time the second tank drains by way of the siphon. After the next washing process has started and the tank is filling up, there will be conducted another determination of concentration.

According to one option, the concentration can be determined in such a way that the second tank 7 is emptied by means of the siphon 13 always after the concentration has been determined by supplying the second tank 7 with a detergent chemical-containing partial flow and a partial flow of solely water until the siphon 13 activates. After the draining, the second tank is refilled and the process is repeated, whereby the concentration of detergent chemical in each batch is known precisely and, therefore, so is also the concentration of a wash solution present in the first tank 8.

The first tank 8 is provided with a second surface level sensing element 15, which indicates the attainment of a given design volume of wash solution in the first tank. The sensing element 15 comprises preferably an electrically conductive static measuring stick, which provides a signal upon coming to contact with liquid. This second sensing element 15 can also be utilized in the determination of a detergent chemical concentration, e.g. by adapting the second tank 7 to be only supplied with a detergent chemical-containing partial flow and the first tank 8 directly with a partial flow containing just water. By means of the sensing element 16 of the second tank 7 it is possible to determine the chemical concentration of a wash solution fraction present in the second tank by only feeding water initially through the magnetic valve 6 of the second line 4 while the valve 5 is closed. Once the chemical concentration in the second tank is determined, the second tank 7 shall still be supplied with a detergent chemical-containing partial flow of water required for the siphon 13 to activate. After the siphon 13 has been activated, the magnetic valve 6 will be closed and the magnetic valve 5 will be opened, whereby the first tank 8 will be supplied with water along the line 18 until the second sensing element 15 issues a signal about the attainment of a design volume in the first tank 8. The supply of water through the magnetic valve 5 is timed in such a way that the draining of the second tank 7 by means of the siphon 13 takes place prior to reaching a design volume in the first tank 8.

The first tank 8 has its upper part region, above the second tank 7, preferably provided with a third surface level sensing element 17, which is used for ensuring that the apparatus is not allowed to overflow. The sensing element 17 comprises preferably an electrically conductive static measuring stick, which provides a signal upon coming to contact with liquid. When the third sensing element 17 issues a signal about reaching an overflow alarm threshold, the supply of water is stopped immediately, e.g. by closing the magnetic valves 5 and 6.

In the foregoing embodiment, the siphon 13 has such a disposition that, after its activation, there is achieved a substantially complete draining of the second tank 7, but the siphon can also be disposed in a top edge region of the second tank as shown in fig. 3, whereby the tank's design volume will be defined as the volume of a space Vₘ between a bottom edge of an intra-tank part of the siphon 13 and a bottom edge of the sensing element 16. Thus, it is possible that the second tank has continuously some wash solution, which is present in a zone below a bottom edge of the siphon 13 and the concentration of which has been adjusted as desired by supplying the second tank with a mixture of detergent chemical and water at a correct ratio for as long as the entire wash solution volume has been exchanged.

In the foregoing embodiment, inside the first tank 8 is disposed one second tank 7 equipped with a siphon 13, but there can be several of such second tanks within the first tank, e.g. a specific one for various detergent chemicals, whereby the supply of water may also take place along several lines as may be required by a particular detergent chemical. Plain water may also has its siphon-equipped designated tank, by means of which the flow meter can be easily calibrated by propelling plain water into the siphon-containing tank and, as the sensing element issues a signal about the attainment of a design volume, the reading given by the flow meter is checked at the same instant and the flow meter is adjusted as necessary to indicate the real design volume. The siphon-containing tanks can also be connected to each other, e.g. such that the detergent chemical-containing tank is emptied by means of the siphon into another siphon-containing tank to which opens a plain water supply line. This way is achieved effective mixing and the mixture is then conducted by means of the siphon into the first tank 8.

With a view to emptying a siphon-containing tank more effectively, the tank can be provided with more than one siphon, which can be disposed at various activation heights.

The control system for an apparatus of the invention can be implemented in a way controlled by a computer, whereby different adjustments, needed e.g. in car wash facilities in various seasons, can be carried out e.g. by making a program code which complies with the calendar in terms of adjusting the concentration little by little from a lower concentration needed in summer to a higher concentration needed in winter and again back towards a lower concentration. Typically, the detergent chemical concentration is in the order of about 5% in summer and in the order of about 30% in winter. In traditional systems, the adjustment has been made by manually swapping different size nozzles in the autumn for a winter setup and others in the spring for a summer setup. This entails that it is often necessary to run even long periods with wrong setups before managing to exchange the nozzles for a size appropriate for the season. In the autumn, this entails a poorer wash result as the concentration of a detergent chemical falls short of what is necessary in light of the conditions and in the spring, on the other hand, the consumption of a detergent chemical becomes excessive in light of the demand, thus incurring extra costs for the car wash facility. In addition, the manual swapping of nozzles leads to considerable maintenance costs and use of time for the personnel conducting the exchange.

Benefits of the foregoing invention are, among others, as follows:
- detergent chemical concentration can be determined dependably and in a reliably working manner
- determination of concentration and necessary corrections to concentration and changes of concentration, e.g. according to various seasons, can be conducted in a computer-controlled manner and by making use of remote control
- moving actuators are not in contact with detergent chemical, thus reducing the need for maintenance
- more attractive price as compared to solutions implemented by means of various control valves
- no need for on-site exchange of nozzles according to various seasons
- homogenizes the concentration, preventing its fluctuation
- improves mixing of the material
- prevents reflux into the chemical tank
- enables a compact assembly
- quick maintenance
- reduces substantially the operating time of magnetic valves, thus increasing the longevity thereof
- no moving parts in contact with detergent chemical.

Although the invention has been described above specifically in relation to car wash facilities, it is applicable also to other corresponding washing plants, such as washing facilities for trains, washing equipment for various industrial plants (e.g. meat packing companies), etc.

### List of reference numerals

- 1: dispenser
- 2: water meter
- 3, 4: water supply
- 5: magnetic valve
- 6: magnetic valve and ejector
- 7: siphon-equipped tank
- 8: wash liquid mixture holding tank
- 9: tank for detergent chemical
- 10: detergent chemical supply pipe
- 11: outlet pipe from wash liquid mixture tank
- 12: pump
- 13: siphon
- 14: siphon tank's overflow brim
- 15-17: surface level sensing elements
- 18: water supply into siphon tank
- 19: wash solution supply into siphon tank
- Vₘ: design volume

## Claims

1. An apparatus (1) for dispensing a wash solution, consisting of a mixture of water and a detergent chemical and to be conveyed into a washing device, at a desired concentration of the detergent chemical, said apparatus comprising a first tank (8) for the wash solution at a desired concentration, said tank including elements (3, 5, 4, 6, 18, 19) for supplying the first tank with an aqueous solution of supply water and a detergent chemical, elements (2) for measuring the total amount of supply water, and elements (11, 12) for conveying the wash solution at a desired concentration from the first tank (8) into a washing device, **characterized in that** the supply water passed through measuring elements (2) is divided into partial flows along at least two lines (3, 18; 4, 19), which are provided with valve elements (5, 6) for adjusting the partial flows of supply water at a desired ratio between the lines; that at least one line (4, 19) for the partial flows of supply water is connected to a detergent chemical supply (10) for conveying the detergent chemical along with water into the tank (8) and at least one second line (3, 18) is intended for the supply of plain water; that the apparatus includes at least one second tank (7) which is in a flow communication with the first tank (8) by way of a siphon element (13), whereby at least the detergent chemical-containing partial flow is adapted to be conveyed into said second tank (7) and to be conducted further into the first tank (8) as soon as the detergent chemical-containing solution present in the second tank (7) has attained a volume required for the siphon to activate; that the second tank (7) is provided with a first surface level sensing element (16), which indicates the attainment of a certain design volume in the second tank (7), whereby the water quantity measuring elements (2) register an indication moment which has been given by the sensing element (16) about the attainment of a design volume, and the amount of water which has flown through the measuring elements at the indication moment and which provides a basis for determining the concentration of a detergent chemical in the second tank (7).

2. An apparatus (1) according to claim 1, **characterized in that** the partial flow of supply water that has passed by way of the plain water supplying line (3, 18) is also conducted into the second tank (7).

3. An apparatus (1) according to claim 1, **characterized in that** the partial flow of supply water that has passed by way of the plain water supplying line (3, 18) is conducted directly into the first tank (8) once a certain amount of the detergent chemical-containing water has been removed by means of the siphon into the first tank (8), which is provided with a second surface level sensing element (15) indicating that the first tank (8) has attained a certain volume of wash solution, whereby the water quantity measuring elements (2) register the indication moment which has been given by the second sensing element (15), and the total amount of water which has flown by way of the measuring elements at the indication moment and which provides a basis of determining the concentration of a detergent chemical in the first tank (8).

4. An apparatus (1) according to any of the preceding claims, **characterized in that** in connection with the valve element (6), included in the line (4, 19) which is flow communication with a detergent chemical tank (9), is provided a nozzle member operating on ejector principle, such that the delivery of water through the ejector nozzle results in the detergent chemical to be drawn in from the detergent chemical tank (9) to admix with water at a certain mixing ratio.

5. An apparatus (1) according to any of the preceding claims, **characterized in that** the supply water measuring elements (2) and the valve elements (5, 6) are connected to a remote control system by means of which the concentration of a detergent chemical in the wash solution can be adjusted as desired.

6. A car wash facility, **characterized in that** the wash facility is provided with one or more pieces of apparatus (1) according to any of the preceding claims.

7. A method for dispensing a wash solution, consisting of a mixture of water and a detergent chemical and to be conveyed into a washing device, at a desired concentration of detergent chemical, said method comprising the use of an apparatus (1) which comprises a first tank (8) for the wash solution at a desired concentration, said tank including elements (3, 5, 4, 6, 18, 19) for supplying the tank with an aqueous solution of supply water and a detergent chemical, elements (2) for measuring the total amount of supply water, and elements (11, 12) for conveying the wash solution at a desired concentration from the first tank (8) into a washing device, **characterized in that** the supply water passed through measuring elements (2) is divided into at least two lines (3, 18; 4, 19), which are each provided with valve elements (5, 6) by means of which partial flows of supply water are adjusted at a desired ratio between the lines; that at least one line (4, 19) for a partial flow of supply water is connected to a detergent chemical supply (10) for conveying the detergent chemical along with water into the tank (8); said at least one line (4, 19) connected to the detergent chemical supply (10) being adapted to open into a second tank (7) which is in flow communication with the first tank (8), said second tank (7) being provided with siphon elements (13) by way of which the detergent chemical-containing partial flow of supply water is capable of being conducted into the first tank (8) as soon as the solution of water and detergent chemical present in the second tank has attained a volume required for the siphon to activate; that the method comprises sensing, by means of a sensing element (16), the attainment of a certain design volume in the second tank (7), and the water quantity measuring elements (2) register the indication moment which has been given by the sensing element (16) about the attainment of a design volume, and the amount of water which has flown through the measuring elements at the indication moment and which provides a basis for determining the concentration of a detergent chemical in the second tank (7).

8. A method according to claim 7, **characterized in that** the method comprises supplying the second tank (7) also with a partial flow of supply water which has passed by way of the plain water supplying line (3, 18), and determining the concentration of a detergent chemical in the second tank (7) by means of the surface level sensing element (16) and the water quantity measuring elements (2), followed by conveying the wash solution at a certain detergent chemical concentration by way of a siphon into the first tank.

9. A method according to claim 8, **characterized in that** the method comprises propelling, after determining the concentration of a detergent chemical, water and detergent chemical by way of the lines (18, 19) into the second tank (7) in continuous operation for a certain period of time, such that the wash solution passes by way of both a siphon (13) and an overflow brim (14) into the first tank (8) whereby, after the supply of water has terminated, the siphon (13) is emptied and, upon re-commencing the process, the concentration of detergent chemical can be determined again by means of the surface level sensing element (16) of the second tank (7) and the water quantity measuring elements (2).

10. A method according to claim 7, **characterized in that** the method comprises conducting a partial flow of supply water, which has passed by way of the plain water supplying line (3, 18), into the first tank (8) after removing a certain volume of the detergent chemical-containing supply water by means of the siphon (13) from the second tank (7) into the first tank (8), said first tank being provided with a second surface level sensing element (15) which indicates that the first tank (8) has attained a certain volume of the wash solution, whereby the water quantity measuring elements (2) register the indication moment given by the second sensing element (15), and the total amount of water which has flown through the measuring elements at the indication moment and which provides a basis for determining the concentration of a detergent chemical in the first tank (8).

11. A method according to any of claims 7-10, **characterized in that** the method comprises using a remote control system by means of which the supply water measuring elements (2) and the valve elements (5, 6) are controlled for determining and adjusting the concentration of a detergent chemical present in the wash solution as desired.

12. A method according to any of claims 7-11, **characterized in that** the method comprises conveying the wash solution to a washing device included in a car wash facility.

13. A program media, the code contained therein, when executed by a computer, implementing a method according to any of claims 7-12.

## Patentansprüche

1. Vorrichtung (1) zum Abgeben einer Waschlösung, bestehend aus einer Mischung aus Wasser und einer Reinigungsmittelchemikalie und zum Befördern der Reinigungsmittelchemikalie in einer gewünschten Konzentration in eine Waschvorrichtung, wobei die Vorrichtung einen ersten Tank (8) für die Waschlösung in einer gewünschten Konzentration umfasst, wobei der Tank Elemente (3, 5, 4, 6, 18, 19) zum Speisen des ersten Tanks mit einer wässrigen Lösung aus Speisewasser und einer Reinigungsmittelchemikalie, Elemente (2) zum Messen der Gesamtmenge an Speisewasser, und Elemente (11, 12) zum Befördern der Waschlösung in einer gewünschten Konzentration aus dem ersten Tank (8) in eine Waschvorrichtung enthält, **dadurch gekennzeichnet, dass** das durch Messelemente (2) geleitete Speisewasser in Teilströme in mindestens zwei Leitungen (3, 18; 4, 19) aufgeteilt wird, die mit Ventilelementen (5, 6) zum Einstellen der Teilströme von Speisewasser in einem gewünschten Verhältnis auf die Leitungen versehen sind; dass mindestens eine Leitung (4, 19) für die Teilströme von Speisewasser mit einer Reinigungsmittelchemikalienspeisung (10) zum Befördern der Reinigungsmittelchemikalie zusammen mit Wasser in den Tank (8) verbunden ist, und mindestens eine zweite Leitung (3, 18) für die Einspeisung von reinem Wasser vorgesehen ist; dass die Vorrichtung mindestens einen zweiten Tank (7) enthält, der über ein Siphonelement (13) mit dem ersten Tank (8) in Strömungsverbindung steht, wobei mindestens der reinigungsmittelchemikalienhaltige Teilstrom in den zweiten Tank (7) befördert und weiter in den ersten Tank (8) geleitet werden kann, sobald die reinigungsmittelchemikalienhaltige Lösung, die in dem zweiten Tank (7) vorhanden ist, ein Volumen erreicht hat, das für die Aktivierung des Siphons erforderlich ist; dass der zweite Tank (7) mit einem ersten Oberflächenspiegel-Sensorelement (16) versehen ist, das das Erreichen eines bestimmten Bauvolumens in dem zweiten Tank (7) anzeigt, wobei die Wassermengenmesselemente (2) einen Anzeigezeitpunkt, der von dem Sensorelement (16) über das Erreichen eines Bauvolumens gegeben wurde, und die Wassermenge, die zum Anzeigezeitpunkt durch die Messelemente geflossen ist und die eine Basis zur Bestimmung der Konzentration einer Reinigungsmittelchemikalie in dem zweiten Tank (7) bereitstellt, registrieren.

2. Vorrichtung (1) nach Anspruch 1, **dadurch gekennzeichnet, dass** der Speisewasserteilstrom, der über die Reinwasserspeiseleitung (3, 18) geleitet wurde, ebenfalls in den zweiten Tank (7) gelenkt wird.

3. Vorrichtung (1) nach Anspruch 1, **dadurch gekennzeichnet, dass** der Speisewasserteilstrom, der über die Reinwasserspeiseleitung (3, 18) geleitet wurde, unmittelbar in den ersten Tank (8) gelenkt wird, sobald eine bestimmte Menge an reinigungsmittelhaltigem Wasser mittels des Siphons in den ersten Tank (8) abgeleitet wurde, der mit einem zweiten Oberflächenspiegel-Sensorelement (15) versehen ist, das anzeigt, dass der erste Tank (8) ein bestimmtes Waschlösungsvolumen erreicht hat, wobei die Wassermengenmesselemente (2) den vom zweiten Messelement (15) abgegebenen Anzeigezeitpunkt und die Gesamtmenge an geflossenem Wasser mittels der Messelemente zum Anzeigezeitpunkt und die eine Basis zur Bestimmung der Konzentration einer Reinigungsmittelchemikalie in dem Messelement in dem ersten Tank (8) bereitstellt, registrieren.

4. Vorrichtung (1) nach einem der vorhergehenden Ansprüche, **dadurch gekennzeichnet, dass** in Verbindung mit dem Ventilelement (6), das in der Leitung (4, 19) enthalten ist, die mit einem Reinigungsmittelchemikalientank (9) in Strömungsverbindung steht, ein Düsenelement, das nach dem Ejektorprinzip arbeitet, derart vorgesehen ist, dass die Abgabe von Wasser durch die Ejektordüse dazu führt, dass die Reinigungsmittelchemikalie aus dem Reinigungsmittelchemikalientank (9) angesaugt wird, um sich mit Wasser in einem bestimmten Mischungsverhältnis zu vermischen.

5. Vorrichtung (1) nach einem der vorhergehenden Ansprüche, **dadurch gekennzeichnet, dass** die Speisewassermesselemente (2) und die Ventilelemente (5, 6) mit einem Fernsteuerungssystem verbunden sind, mit dem die Konzentration einer Reinigungsmittelchemikalie in der Waschlösung nach Wunsch eingestellt werden kann.

6. Autowaschanlage, **dadurch gekennzeichnet, dass** die Waschanlage mit einem oder mehreren Geräten (1) nach einem der vorhergehenden Ansprüche versehen ist.

7. Verfahren zum Abgeben einer Waschlösung, bestehend aus einer Mischung aus Wasser und einer Reinigungsmittelchemikalie, und zum Befördern der Reinigungsmittelchemikalie in einer gewünschten Konzentration in eine Waschvorrichtung, wobei das Verfahren die Verwendung einer Vorrichtung (1) umfasst, die einen ersten Tank (8) für die Waschlösung in einer gewünschten Konzentration umfasst, wobei der Tank Elemente (3, 5, 4, 6, 18, 19) zum Speisen des Tanks mit einer wässrigen Lösung aus Speisewasser und einer Reinigungsmittelchemikalie, Elemente (2) zum Messen der Gesamtmenge an Speisewasser und Elemente (11, 12) zum Befördern der Waschlösung in einer gewünschten Konzentration aus dem ersten Tank (8) in eine Waschvorrichtung enthält, **dadurch gekennzeichnet, dass** das durch Messelemente (2) geleitete Speisewasser in mindestens zwei Leitungen (3, 18; 4, 19) geteilt wird, die jeweils mit Ventilelementen (5, 6) versehen sind, mit denen Speisewasserteilströme in einem gewünschten Verhältnis auf die Leitungen eingestellt werden; dass mindestens eine Leitung (4, 19) für einen Speisewasserteilstrom mit einer Reinigungsmittelchemikalienspeisung (10) zum Befördern der Reinigungsmittelchemikalie zusammen mit Wasser in den Tank (8) verbunden ist; wobei die mindestens eine Leitung (4, 19) die mit der Reinigungsmittelchemikalienspeisung (10) verbunden ist, eingerichtet ist, um in einen zweiten Behälter (7) zu münden, der mit dem ersten Behälter (8) in Strömungsverbindung steht, wobei der zweite Behälter (7) mit Siphonelementen (13) versehen ist, über die der reinigungsmittelchemikalienhaltige Teilstrom des Speisewassers in den ersten Tank (8) geleitet werden kann, sobald die Lösung aus Wasser und Reinigungsmittelchemikalie, die in dem zweiten Tank vorhanden ist, ein Volumen erreicht hat, das für die Aktivierung des Siphons erforderlich ist; dass das Verfahren das Erfassen, mittels eines Sensorelements (16), des Erreichens eines bestimmten Bauvolumens in dem zweiten Tank (7) umfasst, und die Wassermengenmesselemente (2) den Anzeigezeitpunkt, der von dem Sensorelement (16) über das Erreichen eines Bauvolumens gegeben wurde, und die Wassermenge, die zum Zeitpunkt der Anzeige durch die Messelemente geflossen ist und die eine Basis zur Bestimmung der Konzentration einer Reinigungsmittelchemikalie in dem Messelement in dem zweiten Tank (7) bereitstellt, registrieren.

8. Verfahren nach Anspruch 7, **dadurch gekennzeichnet, dass** das Verfahren das Speisen des zweiten Tanks (7) auch mit einem Speisewasserteilstrom, der über die Reinwasserversorgungsleitung (3, 18) geleitet wurde, und das Bestimmen der Konzentration einer Reinigungsmittelchemikalie in dem zweiten Tank (7) mittels des Oberflächenspiegel-Sensorelements (16) und der Wassermengenmesselemente (2), gefolgt vom Befördern der Waschlösung in einer bestimmten Reinigungsmittelkonzentration durch einen Siphon in den ersten Tank, umfasst.

9. Verfahren nach Anspruch 8, **dadurch gekennzeichnet, dass** das Verfahren, nach dem Bestimmen der Konzentration einer Reinigungsmittelchemikalie, das Vortreiben von Wasser und Reinigungsmittelchemikalie mittels der Leitungen (18, 19) in den zweiten Behälter (7) im kontinuierlichen Betrieb für ein bestimmten Zeitraum derart umfasst, dass die Waschlösung sowohl über einen Siphon (13) als auch über einen Überlaufrand (14) in den ersten Tank (8) geleitet wird, wobei, nachdem die Wassereinspeisung beendet wurde, der Siphon (13) entleert wird, und bei Wiederaufnahme des Verfahrens die Konzentration an Reinigungsmittelchemikalie mithilfe des Oberflächenspiegel-Sensorelements (16) des zweiten Tanks (7) und der Wassermengenmesselemente (2) erneut bestimmt werden kann.

10. Verfahren nach Anspruch 7, **dadurch gekennzeichnet, dass** das Verfahren das Lenken eines Speisewasserteilstroms, der über die Reinwasserspeiseleitung (3, 18) geleitet wurde, in den ersten Tank (8) umfasst, nachdem ein bestimmtes Volumen des reinigungsmittelchemikalienhaltigen Speisewassers mittels des Siphons (13) aus dem zweiten Tank (7) in den ersten Tank (8) abgeleitet wurde, wobei der erste Tank mit einem zweiten Oberflächenspiegel-Sensorelement (15) versehen ist, das anzeigt, dass der erste Tank (8) ein bestimmtes Waschlösungsvolumen erreicht hat, wobei die Wassermengenmesselemente (2) den vom zweiten Messelement (15) abgegebenen Anzeigezeitpunkt und die gesamte Wassermenge, die zum Anzeigezeitpunkt durch die Messelemente geflossen ist und die eine Basis zur Bestimmung der Konzentration einer Reinigungsmittelchemikalie in dem Messelement in dem ersten Tank (8) bereitstellt, registrieren.

11. Verfahren nach einem der Ansprüche 7 - 10, **dadurch gekennzeichnet, dass** das Verfahren die Verwendung eines Fernsteuerungssystems umfasst, mit dem die Speisewassermesselemente (2) und die Ventilelemente (5, 6) zum Bestimmen und Einstellen der Konzentration einer in der Waschlösung vorhandenen Reinigungsmittelchemikalie nach Wunsch gesteuert werden.

12. Verfahren nach einem der Ansprüche 7 - 11, **dadurch gekennzeichnet, dass** das Verfahren das Befördern der Waschlösung zu einer Waschvorrichtung umfasst, die in einer Autowaschanlage enthalten ist.

13. Programmdatenträger, darin enthaltener Code, der, wenn er von einem Computer ausgeführt wird, ein Verfahren nach einem der Ansprüche 7 - 12 implementiert.

## Revendications

1. Appareil (1) destiné à la distribution d'une solution de lavage, constitué d'un mélange d'eau et d'un détergent chimique et devant être acheminé dans un dispositif de lavage, à une concentration souhaitée du détergent chimique, ledit appareil comprenant un premier réservoir (8) destiné à la solution de lavage à une concentration souhaitée, ledit réservoir comprenant des éléments (3, 5, 4, 6, 18, 19) permettant d'approvisionner le premier réservoir d'une solution aqueuse d'eau d'alimentation et un détergent chimique, des éléments (2) permettant de mesurer la quantité totale d'eau d'alimentation, et des éléments (11, 12) permettant d'acheminer la solution de lavage à une concentration souhaitée à partir du premier réservoir (8) vers un dispositif de lavage, **caractérisé en ce que** l'eau d'alimentation passant à travers des éléments de mesure (2) est divisée en des flux partiels le long d'au moins deux lignes (3, 18 ; 4, 19), qui sont munies d'éléments de vanne (5, 6) destinés à la régulation des flux partiels d'eau d'alimentation à un rapport souhaité entre les lignes ; qu'au moins une ligne (4, 19) pour les flux partiels d'eau d'alimentation est reliée à un approvisionnement de détergent chimique (10) permettant d'acheminer le détergent chimique avec de l'eau dans le réservoir (8) et qu'au moins une seconde ligne (3, 18) est destinée à l'alimentation en eau courante ; que l'appareil comprend au moins un second réservoir (7) qui est en communication de flux avec le premier réservoir (8) au moyen d'un élément de siphon (13), moyennant quoi au moins le flux partiel contenant le détergent chimique est conçu pour être acheminé dans ledit second réservoir (7) et pour être acheminé plus loin dans le premier réservoir (8) aussitôt que la solution contenant le détergent chimique présente dans le second réservoir (7) a atteint un volume souhaité pour que le siphon s'active ; que le second réservoir (7) est muni d'un premier élément de détection de niveau de surface (16), qui indique l'atteinte d'un certain volume de base dans le second réservoir (7), moyennant quoi les éléments de mesure de quantité d'eau (2) enregistrent un moment d'indication qui a été donné à l'aide de l'élément de détection (16) concernant l'atteinte d'un volume de base et la quantité d'eau qui s'est écoulée à travers les éléments de mesure au moment d'indication, et qui établit une base permettant de déterminer la concentration d'un détergent chimique dans le second réservoir (7).

2. Appareil (1) selon la revendication 1, **caractérisé en ce que** le flux partiel d'eau d'alimentation qui est passée au moyen de la ligne d'alimentation en eau courante (3, 18) est également acheminé vers le second réservoir (7).

3. Appareil (1) selon la revendication 1, **caractérisé en ce que** le flux partiel d'eau d'alimentation qui est passée au moyen de la ligne d'alimentation en eau courante (3, 18) est directement acheminé vers le premier réservoir (8) une fois qu'une certaine quantité d'eau contenant le détergent chimique a été retirée au moyen du siphon vers le premier réservoir (8), qui est muni d'un second élément de détection de niveau de surface (15) indiquant que le premier réservoir (8) a atteint un certain volume de solution de lavage, moyennant quoi les éléments de mesure de quantité d'eau (2) enregistrent le moment d'indication qui a été donné à l'aide du second élément de détection (15), et la quantité totale d'eau qui s'est écoulée au moyen des éléments de mesure au moment d'indication et qui établit une base de détermination de la concentration d'un détergent chimique dans le premier réservoir (8).

4. Appareil (1) selon l'une quelconque des revendications précédentes, **caractérisé en ce qu'**en termes de raccordement avec l'élément de vanne (6), compris dans la ligne (4, 19) qui est en communication de flux avec un réservoir de détergent chimique (9), on fournit un élément de buse fonctionnant sur un principe d'éjection, de telle sorte que l'alimentation en eau à travers la buse déjection amène le détergent chimique à se retirer du réservoir de détergent chimique (9) pour effectuer un mélange avec de l'eau à un certain rapport de mélange.

5. Appareil (1) selon l'une quelconque des revendications précédentes, **caractérisé en ce que** les éléments de mesure do d'alimentation (2) et les éléments de vanne (5, 6) reliés à un système de commande à distance au moyen duquel la concentration d'un détergent chimique dans la solution de lavage peut être réglée comme souhaitée.

6. Installation de lavage de voitures, **caractérisée en ce que** l'installation de lavage est munie d'au moins une pièce d'appareil (1) selon l'une quelconque des revendications précédentes.

7. Procédé de distribution d'une solution de lavage, constitué d'un mélange d'eau et d'un détergent chimique et devant être acheminé dans un dispositif de lavage, à une concentration souhaitée de détergent chimique, ledit procédé comprenant l'utilisation d'un appareil (1) qui comprend un premier réservoir (8) pour la solution de lavage à une concentration souhaitée, ledit réservoir comprenant des éléments (3, 5, 4, 6, 18, 19) permettant d'approvisionner le réservoir avec une solution aqueuse d'eau d'alimentation et un agent détergent chimique, des éléments (2) permettant de mesurer la quantité totale d'eau d'alimentation, et des éléments (11, 12) permettant d'acheminer la solution de lavage à une concentration souhaitée à partir du premier réservoir (8) dans un dispositif de lavage, **caractérisé en ce que** l'eau d'alimentation passant à travers des éléments de mesure (2) est divisée en au moins deux lignes (3, 18 ; 4, 19), qui sont chacune munies d'éléments de vanne (5, 6) au moyen desquels des flux partiels d'eau d'ajustement sont réglés à un rapport souhaité entre les lignes ; qu'au moins une ligne (4, 19) pour un flux partiel d'eau d'alimentation est reliée à un approvisionnement de détergent chimique (10) permettant d'acheminer le détergent chimique avec de l'eau dans le réservoir (8) ; ladite au moins une ligne (4, 19) reliée au dispositif d'alimentation de détergent chimique (10) étant conçue pour s'ouvrir dans un second réservoir (7) qui est en communication de flux avec le premier réservoir (8), ledit second réservoir (7) étant muni d'éléments de siphon (13) au moyen desquels le flux partiel contenant un détergent chimique d'eau d'alimentation est capable d'être acheminé dans le premier réservoir (8) aussitôt que la solution d'eau et de détergent chimique présent dans le second réservoir a atteint un volume nécessaire pour que le siphon s'active ; que le procédé comprend la détection, au moyen d'un élément de détection (16), l'atteinte d'un certain volume de base dans le second réservoir (7), et les éléments de mesure de quantité d'eau (2) enregistrent le moment d'indication qui a été donné à l'aide du de l'élément de détection (16) concernant l'atteinte d'un volume de base, et la quantité d'eau qui s'est écoulée à travers les éléments de mesure au moment d'indication et qui établit une base pour la détermination de la concentration d'un détergent chimique dans le second réservoir (7).

8. Procédé selon la revendication 7, **caractérisé en ce que** le procédé comprend l'alimentation du second réservoir (7) avec également un flux partiel d'eau d'alimentation qui est passée au moyen de la ligne d'alimentation en eau courante (3, 18), et la détermination de la concentration d'un détergent chimique dans le second réservoir (7) au moyen de l'élément de détection de niveau de surface (16) et des éléments de mesure de quantité d'eau (2), suivi de l'acheminement de la solution de lavage à une certaine concentration en détergent chimique au moyen d'un siphon dans le premier réservoir.

9. Procédé selon la revendication 8, **caractérisé en ce que** le procédé comprend la propulsion, après la détermination de la concentration d'un détergent chimique, d'eau et de détergent chimique au moyen des lignes (18, 19) dans le second réservoir (7) en fonctionnement continu pendant une certaine durée, de telle sorte que la solution de lavage passe au moyen à la fois d'un siphon (13) et d'un bord de déversement (14) dans le premier réservoir (8) moyennant quoi, après que l'alimentation en eau soit terminée, le siphon (13) est vidé et, au moment de recommencer le procédé, la concentration de détergent chimique peut être déterminée de nouveau au moyen de l'élément de détection de niveau de surface (16) du second réservoir (7) et des éléments de mesure de quantité d'eau (2).

10. Procédé selon la revendication 7, **caractérisé en ce que** le procédé comprend la réalisation d'un flux partiel d'eau d'alimentation, qui est passée au moyen de la ligne d'alimentation en eau courante (3, 18), dans le premier réservoir (8) après l'élimination d'un certain volume d'eau d'alimentation contenant un détergent chimique au moyen du siphon (13) à partir du second réservoir (7) vers le premier réservoir (8), ledit premier réservoir étant muni d'un second élément de détection de niveau de surface (15) qui indique que le premier réservoir (8) a atteint un certain volume de la solution de lavage, moyennant quoi les éléments de mesure de quantité d'eau (2) enregistrent le moment d'indication donné par le second élément de détection (15), et la quantité totale d'eau qui s'est écoulée à travers les éléments de mesure au moment d'indication et qui établit une base pour la détermination de la concentration d'un détergent chimique dans le premier réservoir (8).

11. Procédé selon l'une quelconque des revendications 7 à 10, **caractérisé en ce que** le procédé comprend l'utilisation d'un système de commande à distance au moyen duquel les éléments de mesure d'eau d'alimentation (2) et les éléments de vanne (5, 6) sont commandés pour la détermination et le réglage de la concentration d'un détergent chimique présent dans la solution de lavage comme souhaité.

12. Procédé selon l'une quelconque des revendications 7 à 11, **caractérisé en ce que** le procédé comprend l'acheminement de la solution de lavage vers un dispositif de lavage compris dans une installation de lavage de voitures.

13. Support de programme, dont le code contenu dans celui-ci, une fois exécuté par un ordinateur, mettant en oeuvre un procédé selon l'une quelconque des revendications 7 à 12.
